(19) Europäisches Patentamt
European Patent Office
Office européen des brevets

(11) **EP 2 269 801 A1**

(12) **EUROPEAN PATENT APPLICATION**
published in accordance with Art. 153(4) EPC

(43) Date of publication:
**05.01.2011 Bulletin 2011/01**

(51) Int Cl.:
**B29C 45/66** (2006.01)　　**B22D 17/26** (2006.01)
**B29C 33/22** (2006.01)

(21) Application number: **09721383.9**

(22) Date of filing: **23.02.2009**

(86) International application number:
**PCT/JP2009/053207**

(87) International publication number:
**WO 2009/116358 (24.09.2009 Gazette 2009/39)**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **18.03.2008 JP 2008069609**

(71) Applicant: **Toyo Machinery & Metal Co. Ltd.**
**Akashi-shi**
**Hyogo 674-0091 (JP)**

(72) Inventor: **TANIGUCHI, Yoshiya**
**Akashi-shi**
**Hyogo 674-0091 (JP)**

(74) Representative: **Jansen, Cornelis Marinus**
**VEREENIGDE**
**Johan de Wittlaan 7**
**2517 JR Den Haag (NL)**

(54) **MOLDING MACHINE**

(57) The invention is to provide a molding machine which has a drive system miniaturized and having high responsibility to start control, suspension control, acceleration control and deceleration control so that products can be molded with higher efficiency. A molding machine of a direct drive system for transmitting rotary power of an electric motor 6 directly to a nut body 12 of a ball screw mechanism 8 provided in a mold clamping unit is **characterized in that** a built-in motor including a cylindrical motor rotor 34 disposed in a cylindrical motor stator 32 is used as the electric motor 6, an inner diameter of the motor rotor 34 is formed to be large enough to be penetrated by a screw shaft 13 screwed into the nut body 12, the motor rotor 34 is arranged concentrically with the screw shaft 13, and the nut body 12 and the motor rotor 34 are bolted while end surfaces of the nut body 12 and the motor rotor 34 are made to abut against each other so that the nut body 12 and the motor rotor 34 are disposed in an axial direction of the screw shaft 13.

Fig. 1

EP 2 269 801 A1

## Description

Technical Field

The present invention relates to a molding machine such as an injection molding machine or a die-cast machine, and particularly relates to a configuration of a driving portion for giving a torque to a nut body of a ball screw mechanism provided in a mold clamping unit.

Background Art

Recent molding machines often use a direct drive system as a system for driving a ball screw mechanism provided in a mold clamping unit in order to miniaturize a mechanical structure and improve responsibility of the drive system to start control, suspension control, acceleration control and deceleration control. In the direct drive system, the torque of an electric motor is transmitted directly to a nut body of the ball screw mechanism without involving a power transmission mechanism such as a train of gears, a timing belt or the like (see Patent Documents 1, 2 and 3).

In a mold clamping unit disclosed in Patent Document 1, a nut (nut body) constituting a ball screw mechanism is rotatably held in a through hole with a bearing lying therebetween. The through hole is made in an end plate (tail stock). One end of a screw shaft screwed down to the nut is coupled with a moving die plate (movable die plate). A built-in motor is built in the end plate. In the built-in motor, a cylindrical rotor (motor rotor) is disposed in a cylindrical stator coil (motor stator). The nut is fitted to the inner surface of the rotor. Thus, the mold clamping unit disclosed in Patent Document 1 has a structure in which the rotor is disposed on the outer circumference of the nut.

In a mold clamping unit disclosed in Patent Document 2, a linear motor (built-in motor) having a cylindrical stator (motor stator), a cylindrical rotor (motor rotor) and a so-called nut housing is attached to the back side of a link housing (tail stock) coaxially with a through hole provided in the link housing. The rotor is disposed in the stator. The nut housing is a cylindrical member attached to the inner circumference of the rotor. A ball screw nut (nut body) constituting a ball screw mechanism is fitted to the inner surface of the nut housing. The rotor, the nut housing and the ball screw nut are rotatably held in a casing of the linear motor with required bearings lying therebetween. In addition, a coupling bolt (screw shaft) is screwed down to the ball screw nut. One end of the coupling bolt penetrates the through hole provided in the link housing, and is disposed on the opposite side to the mounting side of the linear motor. A cross head is attached to a front end portion of the coupling bolt. The cross head is coupled with a link constituting a toggle mechanism (toggle link mechanism). Accordingly, the mold clamping unit disclosed in Patent Document 2 also has a structure in which the nut housing and the rotor are disposed on the outer circumference of the nut.

In a mold clamping unit disclosed in Patent Document 3, a ball screw nut (nut body) constituting a ball screw mechanism is rotatably held in a through hole provided in a toggle support (tail stock). In addition, a drive unit (built-in motor) having a cylindrical stator core (motor stator), a cylindrical rotor core (motor rotor) and a so-called rotary sleeve is attached to the back side of the toggle support. The rotor core is disposed in the stator core. The rotary sleeve is a two-step cylindrical member attached to the inner surface of the rotor core. The ball screw nut (nut body) is fitted into a large-diameter portion of the rotary sleeve. A cross head is attached to a front end portion of a ball screw shaft (screw shaft). The ball screw shaft is screwed down to the ball screw nut so as to penetrate the through hole provided in the toggle support and to be disposed on the opposite side to the mounting side of the drive unit. The cross head is coupled with a link constituting a toggle mechanism (toggle link mechanism). Accordingly, the mold clamping unit disclosed in Patent Document 3 also has a structure in which the rotary sleeve and the rotor core are disposed on the outer circumference of the ball screw nut.

In each mold clamping unit disclosed in Patent Documents 1 to 3, the nut body of the ball screw mechanism is driven to rotate by the built-in motor whose motor rotor is connected directly to the nut body. Accordingly, as compared with the case where an electric motor and a nut body are connected to each other through a power transmission mechanism such as a train of gears or a timing belt, the mechanical structure can be miniaturized, while the inertia load on the drive system can be reduced to improve the responsibility of the drive system including the nut body to start control, suspension control, acceleration control and deceleration control and hence enhance the efficiency in molding of products.

    Patent Document 1: JP-B-2-55214
    Patent Document 2: JP-A-7-329135
    Patent Document 3: Japanese Patent No. 2866314

Disclosure of the Invention

Problems that the Invention is to Solve

The inertia load on a drive system is proportional to GD2, that is, a product of weight G of the drive system and a square of a diameter D of gyration of the same. In order to improve the responsibility of the drive system to start control, suspension control, acceleration control and deceleration control, it is therefore important to reduce the weight G of the drive system and the diameter D of gyration of the same. Particularly a square of the diameter D of gyration of the drive system acts on the responsibility. It is therefore more important to reduce the diameter D.

As disclosed in Patent Documents 1 to 3, however, any mold clamping unit according to the background art has a configuration where a motor rotor is disposed on the outer circumferential side of a nut body. Thus, due to a limit to reduction in the diameter D of gyration in itself, it is difficult to reduce the inertia load GD2 of the drive system. Particularly in the mold clamping unit disclosed in Patent Document 2 or Patent Document 3, a member called a nut housing or a rotary sleeve is disposed between the nut body and the motor rotor. Thus, it is more difficult to reduce the diameter D of gyration. As a result, it is difficult to further improve the responsibility of the drive system to start control, suspension control, acceleration control and deceleration control, and it is hence difficult to mold products with higher efficiency.

The present invention was accomplished in order to solve the problems of the background art. An object of the invention is to provide a molding machine which has a drive system miniaturized and having high responsibility to start control, suspension control, acceleration control and deceleration control so that products can be molded with higher efficiency.

Means for Solving the Problems

In order to achieve the aforementioned object, a molding machine according to a first configuration of the invention includes a fixed die plate mounted with a fixed side mold, a movable die plate mounted with a movable side mold, a ball screw mechanism including a nut body held rotatably and a screw shaft screwed down to the nut body, a tail stock holding the ball screw mechanism, a toggle link mechanism disposed between the tail stock and the movable die plate and driven by the screw shaft to drive the movable die plate in a direction to open/close a mold, and an electric motor driving and rotating the nut body, wherein a built-in motor in which a cylindrical motor rotor having an inner diameter large enough to be penetrated by the screw shaft is built in a cylindrical motor stator is used as the electric motor, and the motor rotor and the screw shaft are disposed coaxially with each other while an end surface of the nut body is attached to an end surface of the motor rotor so that the motor rotor and the nut body are disposed in an axial direction of the screw shaft.

When the end surface of the nut body is attached to the end surface of the motor rotor in this manner, the diameter of gyration of a drive system including the nut body and the motor rotor can be reduced, as compared with the case where the motor rotor is disposed on the outer circumferential side of the nut body. It is therefore possible to improve the responsibility of the drive system to start control, suspension control, acceleration control and deceleration control remarkably, so that it is possible to enhance the efficiency in molding of products.

According to a second configuration of the invention, the molding machine according to the first configuration is adapted so that bearings for rotatably supporting the motor rotor and the nut body are provided between the tail stock and the nut body.

When the bearings for rotatably supporting the motor rotor and the nut body are thus provided between the tail stock and the nut body attached to the end surface of the motor rotor, the setting distance between the bearings can be increased, as compared with the case where the bearings for rotatably supporting the motor rotor and the nut body are provided between the tail stock and the nut body fitted into the inner circumferential side of the motor rotor. Thus, the rotation of the drive system including the motor rotor and the nut body can be made stable and smooth.

According to a third configuration of the invention, the molding machine according to the first configuration is adapted so that a rotary encoder including a cylindrical encoder rotor having an inner diameter large enough to be penetrated by the screw shaft, a code plate disposed on an outer circumference of the encoder rotor and a detection device disposed to be opposed to the code plate is provided as means for detecting an amount of rotation of the motor rotor, and the encoder rotor and the code plate are disposed coaxially with the motor rotor while the encoder rotor and the motor rotor are coupled by a required coupler.

When the rotary encoder in which the code plate is disposed on the outer circumference of the cylindrical encoder rotor having an inner diameter large enough to be penetrated by the screw shaft is provided thus as the means for detecting an amount of rotation of the motor rotor, the screw shaft is allowed to penetrate the encoder rotor so that the whole length of a mold clamping unit can be shortened, as compared with the case where a rotary encoder having a disc-like code plate not allowing the screw shaft to penetrate the code plate is disposed out of the movable range of the screw shaft.

Effect of the Invention

In a molding machine according to the invention, a built-in motor in which a cylindrical motor rotor having an inner diameter large enough to be penetrated by a screw shaft constituting a ball screw mechanism is built in a cylindrical motor stator is used as an electric motor provided in a mold clamping unit, and the motor rotor and the screw shaft are disposed coaxially with each other while an end surface of the nut body is attached to an end surface of the motor rotor so that the motor rotor and the nut body are disposed in an axial direction of the screw shaft. Thus, the diameter of gyration of a drive system including the nut body and the motor rotor can be reduced, as compared with the case where the motor rotor is disposed on the outer circumferential side of the nut body. It is therefore possible to improve the responsibility of the drive system to start control, suspension control, acceleration control and deceleration control, so that it is possible to enhance the efficiency in molding of products.

Best Mode for Carrying Out the Invention

An embodiment of a mold clamping unit provided in a molding machine according to the invention will be described with reference to Figs. 1 to 3. Fig. 1 is a sectional view of a mold opening state of a mold clamping unit according to the embodiment. Fig. 2 is a sectional view of a mold closing state of the mold clamping unit according to the embodiment. Fig. 3 is a sectional view of an electric motor provided in the mold clamping unit according to the embodiment.

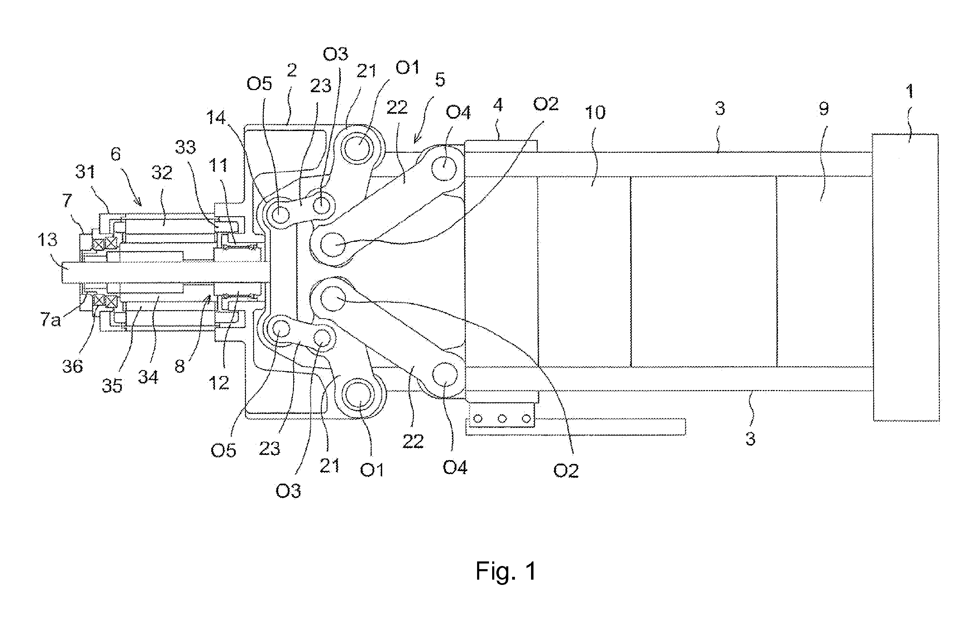

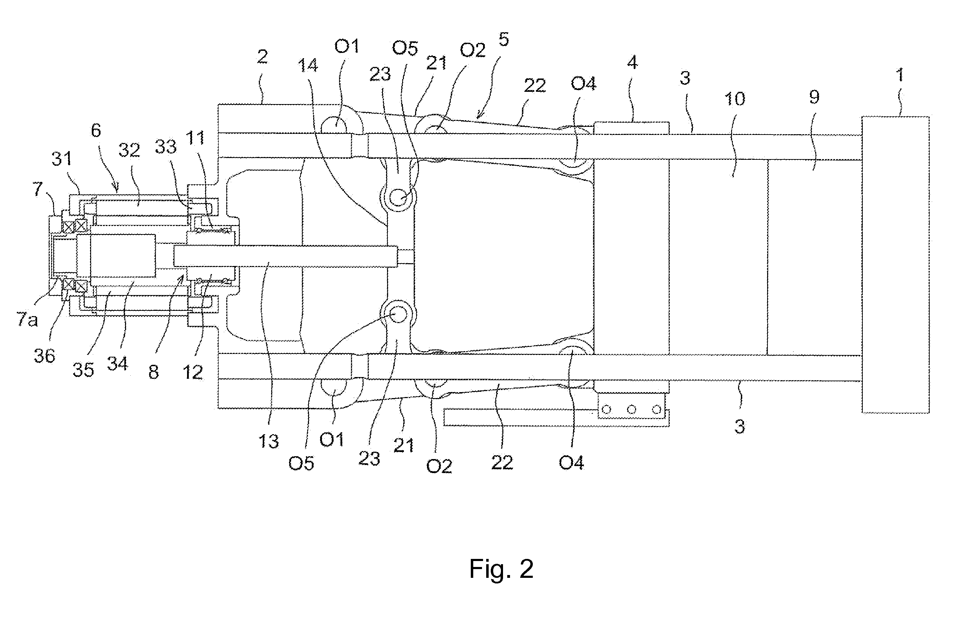

As shown in Figs. 1 and 2, the mold clamping unit according to the embodiment has a fixed die plate 1 and a tail stock 2 which are fixed onto a bed of a not-shown molding machine, a plurality of tie bars 3 whose opposite ends are fixed to the fixed die plate 1 and the tail stock 2 respectively, a movable die plate 4 which is guided by the tie bars 3 so as to move forward/backward between the fixed die plate 1 and the tail stock 2, a toggle link mechanism 5 which couples the tail stock 2 and the movable die plate 4, an electric motor (servo motor) 6 which is a mold opening/closing drive source mounted on the tail stock 2, a rotary encoder 7 which detects an amount of rotation of the electric motor 6, and a ball screw mechanism 8 which converts the rotation of the electric motor 6 into linear motion and transmits the linear motion to the toggle link mechanism 5. A fixed side mold 9 is mounted on the fixed die plate 1, and a movable side mold 10 is mounted on the movable die plate 4.

The ball screw mechanism 8 is constituted by a nut body 12 rotatably held on the tail stock 2 by a bearing 11, a screw shaft 13 screwed down to the nut body 12, and a cross head 14 attached to one end of the screw shaft 13. The ball screw mechanism 8 converts the rotational motion of the nut body 12 driven and rotated by the electric motor 6 into linear motion of the screw shaft 13 and the cross head 14, and transmits the linear motion to the toggle link mechanism 5.

The toggle link mechanism 5 is constituted by a B link 21 whose one end is rotatably linked with the tail stock 2, an A link 22 whose one end is rotatably linked with the movable die plate 4 while the other end is linked to the other end of the B link 21 so as to rotate relatively thereto, and a C link 23 whose one end is rotatably linked with the cross head 14 while the other end is linked with an intermediate portion of the B link 21 so as to rotate relatively thereto. The reference sign O1 represents a link portion of the B link 21 to the tail stock 2; 02, a link portion of the A link 22 to the B link 21; 03, a link portion of the C link 23 to the B link 21; 04, a link portion of the A link 22 to the movable die plate 4; and 05, a link portion of the C link 23 to the cross head 14. In this manner, the toggle link mechanism 5 according to this embodiment is a link mechanism having a five-point bearing structure which includes the A link 22, the B link 21 and the C link 23 and has the five link portions (rotational centers) O1 to 05. Although a double toggle link mechanism having a five-point bearing structure is depicted in Figs. 1 and 2, it is a matter of course that a toggle link mechanism of another form may be provided.

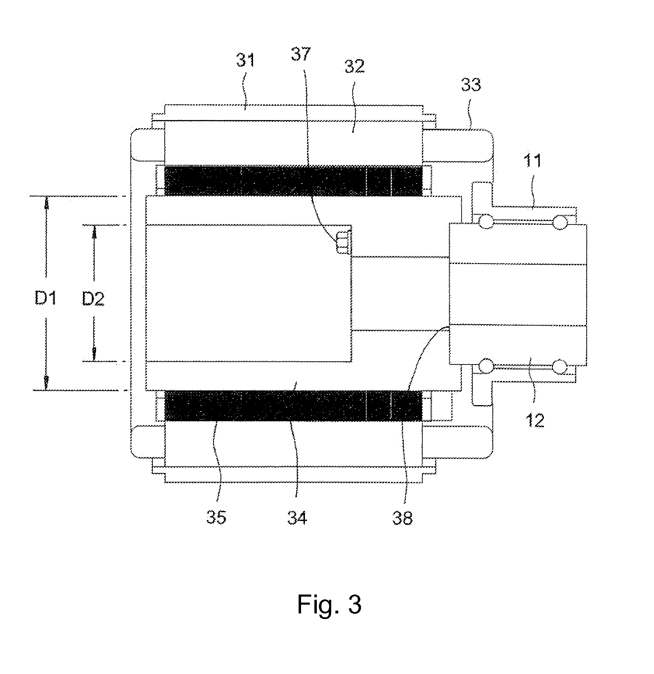

As depicted in an enlarged view in Fig. 3, the electric motor 6 is constituted by a casing 31, a cylindrical motor stator 32 fixed to the casing 31, a motor coil 33 wound on the outer circumference of the motor stator 32, a cylindrical motor rotor 34 disposed inside the motor stator 32, a motor magnet 35 attached to the outer surface of the motor rotor 34, and a bearing 36 (see Figs. 1 and 2) for rotatably supporting the motor rotor 34 and the motor magnet 35 on the casing 31. The inner diameter D2 of the motor rotor 34 is formed to be large enough to be penetrated by the screw shaft 13 constituting the ball screw mechanism 8. In the electric motor 6, as shown in Fig. 1, the motor rotor 34 is disposed coaxially with the nut body 12 and the screw shaft 13 constituting the ball screw mechanism 8, and attached to the back surface side of the tail stock 2.

As shown in Fig. 3, the aforementioned nut body 12 of the ball screw mechanism 8 is fastened to the motor rotor 34 by use of a bolt 37 in the state where one end surface of the nut body 12 has been made to abut against one end surface of the motor rotor 34. Thus, the nut body 12 and the motor rotor 34 are disposed in the axial direction of the screw shaft 13. A shallow hollow step portion 38 is formed in the nut body attachment side end surface of the motor rotor 34. An end portion of the nut body 12 is fitted into the step portion 38 so that the nut body 12 can be automatically positioned relatively to the motor rotor 34.

The rotary encoder 7 is constituted by a ring-like encoder rotor 7a having an inner diameter large enough to be penetrated by the screw shaft 13, a not-shown code plate disposed on the outer circumference of the encoder rotor 7a, and a not-shown detection device disposed oppositely to the code plate. The rotary encoder 7 is attached to the outside of the electric motor 6. As shown in Figs. 1 and 2, the encoder rotor 7a and the motor rotor 34 are disposed coaxially, and coupled with each other by press fitting of one end of the motor rotor 34 into the inner surface of the encoder rotor 7a. In this manner, by use of the rotary encoder 7 with the ring-like encoder rotor 7a having an inner diameter large enough to be penetrated by the screw shaft 13, the screw shaft 13 can be made to penetrate the encoder rotor 7a in the mold open state, as shown in Fig. 1. As a result, the whole length of the mold clamping unit can be shortened, as compared with the case where a rotary encoder with a disc-like code plate not allowing the screw shaft 13 to penetrate the code plate is disposed out of the movable range of the screw shaft 13.

Description will be made below on the operation of the molding machine having the mold clamping unit according to the embodiment. When the electric motor 6 is driven to rotate the nut body 12 in a predetermined direction in the mold open state shown in Fig. 1, the screw shaft 13 is moved to press the toggle link mechanism 5. As a result, the C link 23 is pressed by the cross head 14 attached to the front end portion of the screw shaft 13. The B link 21 is pressed by the C link 23. The A link 22 is pressed by the B link 21. Thus, the B link 21 and the A link 22 are expanded gradually. As soon as the B link 21 and the A link 22 are expanded in a straight line, the fixed side mold 9 and the movable side mold 10 are brought into close contact with each other so that a predetermined mold clamping force is given to the fixed side mold 9 and the movable side mold 10, as shown in Fig. 2. Thus, a mold cavity can be filled with a molding material.

When the electric motor 6 is driven to rotate the nut body 12 backward after the solidification of filler, the screw shaft 13 is moved to pull the toggle link mechanism 5. As a result, the C link 23 is pulled by the cross head 14 attached to the front end portion of the screw shaft 13. The B link 21 is pulled by the C link 23. The A link 22 is pulled by the B link 21. Thus, the B link 21 and the A link 22 are folded gradually. As soon as the B link 21 and the A link 22 are thoroughly folded, the fixed side mold 9 and the movable side mold 10 are separated at a predetermined distance from each other as shown in Fig. 1. Thus, a product can be extracted from the mold cavity.

The rotary encoder 7 detects the number of rotations of the motor rotor 34, and supplies, to a not-shown control unit, a signal corresponding to the detected number of rotations of the motor rotor 34. The control unit supplies a servo signal to the electric motor 6 to perform servo-control for starting, suspending, accelerating and decelerating the electric motor 6.

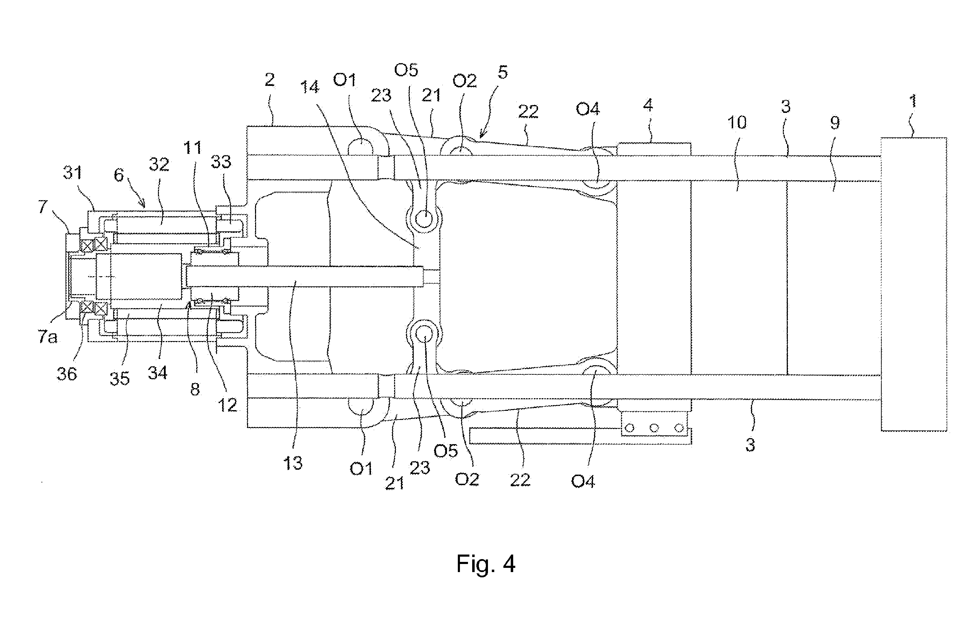

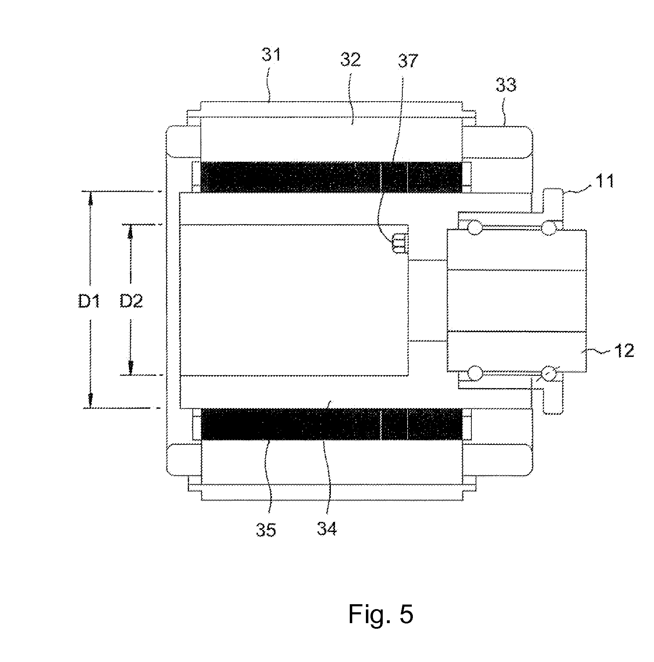

Fig. 4 shows a mold clamping unit according to a comparative example and Fig. 5 shows the configuration of an electric motor and a nut body provided in the mold clamping unit according to the comparative example. The mold clamping unit is a mold clamping unit disclosed in any one of Patent Documents 1 to 3, which is rewritten and modeled into a form easy to be compared with the mold clamping unit according to the embodiment. The mold clamping unit according to the comparative example is characterized in that the nut body 12 of the ball screw mechanism 8 is inserted into the inner circumference of the motor rotor 34. The other configuration is the same as that of the mold clamping unit of the molding machine according to the embodiment. Therefore, parts corresponding to those according to the embodiment are referred to by the same numerals correspondingly, and description thereof will be omitted.

As is apparent from comparison between Fig. 3 and Fig. 5, in the mold clamping unit according to the embodiment, the end surface of the motor rotor 34 is made to abut against the end surface of the nut body 12 so that a space portion to which the nut body 12 should be inserted does not have to be formed in the motor rotor 34 as in the mold clamping unit according to the comparative example characterized in that the nut body 12 is inserted into the motor rotor 34. It is therefore possible to reduce the outer diameter D1 and the inner diameter D2 of the drive system constituted by the nut body 12, the motor rotor 34 and the motor magnet 35, as compared with the mold clamping unit according to the comparative example.

As known well, torque in the rising phase of any motor changes in accordance with its rotational speed. Assume that average acceleration torque T (kg·m) designates average torque since start of an electric motor and till arrival at a constant speed, GD2 (kgf·m2) designates an inertia load acting on the motor, and N (min-1) designates the rotational speed of the motor. The average acceleration toque T required to accelerate the inertia load GD2 to the rotational speed N in a time t (sec) can be obtained by the following expression (1):

[Expression 1]

$$t = \frac{GD^2 \times N}{375 \times T} \qquad \ldots(1)$$

G in the inertia load GD2 designates the weight (kgf) of a drive system, and D designates the outer diameter (m2) of the drive system. In the mold clamping unit according to the embodiment, as described above, the outer diameter D1 and the inner diameter D2 of the drive system can be reduced, as compared with those in the mold clamping unit according to the comparative example. Accordingly, when the average acceleration torque T and the motor rotational speed N are constant, the time (acceleration time) t required for accelerating the inertia load to the rotational speed N based on the expression (1) can be made shorter in the mold clamping unit according to the embodiment than in the mold clamping unit according to the comparative example.

For example, assume that the drive system in the mold clamping unit according to the comparative example has an outer diameter of 250 mm, an inner diameter of 200 mm, a length of 200 mm, a specific gravity of 7.8 and an average acceleration torque T of 100 kg·m. Then, GD2 is 1.41 kgf·m2 and acceleration time t is 0.03 sec. On the other hand, assume that the drive system in the mold clamping unit according to the embodiment has an outer diameter of 200 mm, an inner diameter of 150 mm, a length of 200 mm, a specific gravity of 7.8 and an average acceleration torque T of 100 kg·m. Then, GD2 is 0.69 kgf·m2 and acceleration time t is 0.015 sec.

Here, assume that the mold open distance and the mold open rate of the mold clamping unit are 50 mm and 500 mm/sec. Then, in the case of the mold clamping unit according to the comparative example, the acceleration time is 0.03 sec, the moving distance of the movable side mold 10 in the acceleration time is 15 mm (0.03×500), the moving distance of the movable side mold 10 opened/closed at a constant rate is 35 mm (=50-15), and the time required for moving the movable side mold 10 by 35 mm is 0.07 sec (=35÷500). Accordingly, the mold open/close time (one way) of the mold clamping unit according to the comparative example is 0.13 sec (=0.07+0.03x2), and the two-way mold open/close time is 0.26 sec. In the same conditions, in the mold clamping unit according to the embodiment, whose acceleration time is 0.015 sec, the mold open/close time (two ways) of the mold clamping unit is 0.23 sec.

There is a difference of 0.03 sec between the both. This difference corresponds to a time difference per cycle of molding. This means that disc molding requiring 2.0 sec per cycle by use of a molding machine provided with the mold clamping unit according to the comparative example can be carried out in 1.97 sec per cycle by use of a molding machine provided with the mold clamping unit according to the embodiment. Assume that the operating time per day is 24 hours. In this case, 43,200 discs can be manufactured by the molding machine provided with the mold clamping unit according to the comparative example, while 45,685 discs can be manufactured by the molding machine provided with the mold clamping unit according to the embodiment. Thus, the productivity can be enhanced extremely.

In addition, as is apparent from comparison between Figs. 1 and 4, in the mold clamping unit according to the embodiment, the end surface of the nut body 12 is made to abut against the end surface of the motor rotor 34, and the drive system constituted by the nut body 12, the motor rotor 34 and the motor magnet 35 is supported by the bearing 11 provided between the tail stock 2 and the nut body 12 and the bearing 36 provided between the casing 31 and the motor rotor 34. Accordingly, the setting distance between the bearings 11 and 36 can be increased, as compared with the mold clamping unit according to the comparative example in which the nut body 12 is inserted into the motor rotor 34. Thus, in the mold clamping unit according to the embodiment, the drive system can be rotated more stably and more smoothly than in the mold clamping unit according to the comparative example.

The nut body 12 is fitted directly to the inner surface of the motor rotor 34 in the embodiment. However, in addition to such a configuration, a member called a nut housing or a rotary sleeve may be disposed between the motor rotor 34 and the nut body 12.

Brief Description of the Drawings

[Fig. 1] A sectional view of a mold opening state of a mold clamping unit according to an embodiment.
[Fig. 2] A sectional view of a mold closing state of the mold clamping unit according to the embodiment.
[Fig.3] A sectional view of an electric motor and a nut body to be provided in the mold clamping unit according to the embodiment.
[Fig. 4] A sectional view of a mold closing state of the mold clamping unit according to the comparative example..

[Fig. 5] A sectional view of an electric motor and a nut body to be provided in the mold clamping unit according to the comparative example.

Description of Reference Numerals

| 1 | fixed die plate |
|---|---|
| 2 | tail stock |
| 3 | tie bar |
| 4 | movable die plate |
| 5 | toggle link mechanism |
| 6 | electric motor |
| 7 | rotary encoder |
| 8 | ball screw mechanism |
| 9 | fixed side mold |
| 10 | movable side mold |
| 11 | bearing |
| 12 | nut body |
| 13 | screw shaft |
| 14 | cross head |
| 21 | B link |
| 22 | A link |
| 23 | C link |
| 31 | casing |
| 32 | motor stator |
| 33 | motor coil |
| 34 | motor rotor |
| 35 | motor magnet |
| 36 | bearing |
| 37 | bolt |

**Claims**

1. A molding machine comprising a fixed die plate mounted with a fixed side mold, a movable die plate mounted with a movable side mold, a ball screw mechanism including a nut body held rotatably and a screw shaft screwed down to the nut body, a tail stock holding the ball screw mechanism, a toggle link mechanism disposed between the tail stock and the movable die plate and driven by the screw shaft to drive the movable die plate in a direction to open/ close a mold, and an electric motor driving and rotating the nut body, wherein:

   a built-in motor in which a cylindrical motor rotor having an inner diameter large enough to be penetrated by the screw shaft is built in a cylindrical motor stator is used as the electric motor, and the motor rotor and the screw shaft are disposed coaxially with each other while an end surface of the nut body is attached to an end surface of the motor rotor so that the motor rotor and the nut body are disposed in an axial direction of the screw shaft.

2. A molding machine according to Claim 1, wherein:

   bearings for rotatably supporting the motor rotor and the nut body are provided between the tail stock and the nut body.

3. A molding machine according to Claim 1, wherein:

   a rotary encoder including a cylindrical encoder rotor having an inner diameter large enough to be penetrated by the screw shaft, a code plate disposed on an outer circumference of the encoder rotor and a detection device disposed to be opposed to the code plate is provided as means for detecting an amount of rotation of the motor rotor, and the encoder rotor and the code plate are disposed coaxially with the motor rotor while the encoder rotor and the motor rotor are coupled by a required coupler.

Fig. 1

Fig. 2

Fig. 3

EP 2 269 801 A1

Fig. 4

Fig. 5

## INTERNATIONAL SEARCH REPORT

| | International application No. |
|---|---|
| | PCT/JP2009/053207 |

A. CLASSIFICATION OF SUBJECT MATTER
*B29C45/66*(2006.01)i, *B22D17/26*(2006.01)i, *B29C33/22*(2006.01)i

According to International Patent Classification (IPC) or to both national classification and IPC

B. FIELDS SEARCHED

Minimum documentation searched (classification system followed by classification symbols)
B29C45/00-45/84, B22D17/00-17/32, B29C33/00-33/76, G01D5/00-5/62

Documentation searched other than minimum documentation to the extent that such documents are included in the fields searched
Jitsuyo Shinan Koho        1922-1996   Jitsuyo Shinan Toroku Koho   1996-2009
Kokai Jitsuyo Shinan Koho  1971-2009   Toroku Jitsuyo Shinan Koho   1994-2009

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2006-240308 A  (Nissei Plastic Industrial Co., Ltd.),<br>14 September, 2006 (14.09.06),<br>Claims; Par. Nos. [0019] to [0033]; Figs. 3, 7<br>(Family: none) | 1,2<br>3 |
| Y | JP 2007-52008 A  (Sick Stegmann GmbH.),<br>01 March, 2007 (01.03.07),<br>Claims; Figs. 1, 2<br>& US 2007/0034787 A1    & EP 1752741 A1 | 3 |
| Y | JP 4-2917 A  (Victor Company Of Japan, Ltd.),<br>07 January, 1992 (07.01.92),<br>Claims; Fig. 1<br>(Family: none) | 3 |

| ☒ Further documents are listed in the continuation of Box C. | ☐ See patent family annex. |
|---|---|

| * Special categories of cited documents:<br>"A" document defining the general state of the art which is not considered   to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
|---|---|

| Date of the actual completion of the international search<br>06 March, 2009 (06.03.09) | Date of mailing of the international search report<br>24 March, 2009 (24.03.09) |
|---|---|
| Name and mailing address of the ISA/<br>Japanese Patent Office | Authorized officer |
| Facsimile No. | Telephone No. |

Form PCT/ISA/210 (second sheet) (April 2007)

**INTERNATIONAL SEARCH REPORT**

| International application No. |
| --- |
| PCT/JP2009/053207 |

C (Continuation).    DOCUMENTS CONSIDERED TO BE RELEVANT

| Category* | Citation of document, with indication, where appropriate, of the relevant passages | Relevant to claim No. |
| --- | --- | --- |
| A | JP 10-225965 A  (Sumitomo Heavy Industries, Ltd.),<br>25 August, 1998 (25.08.98),<br>Par. Nos. [0022] to [0029]; Fig. 1<br>(Family: none) | 1-3 |
| A | JP 2003-11195 A  (Sumitomo Heavy Industries, Ltd.),<br>15 January, 2003 (15.01.03),<br>Full text<br>(Family: none) | 1-3 |
| A | JP 2000-263609 A  (Toyo Machinery & Metal Co., Ltd.),<br>26 September, 2000 (26.09.00),<br>Par. No. [0009]<br>(Family: none) | 1-3 |

Form PCT/ISA/210 (continuation of second sheet) (April 2007)

**EP 2 269 801 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2055214 B
- JP 7329135 A
- JP 2866314 B